(19) **Europäisches Patentamt / European Patent Office / Office européen des brevets**

(11) **EP 1 725 482 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: 05714686.2

(22) Anmeldetag: **11.03.2005**

(51) Int Cl.:
***B65G 35/00*** *(2006.01)* ***B65G 21/20*** *(2006.01)*

(86) Internationale Anmeldenummer:
**PCT/CH2005/000144**

(87) Internationale Veröffentlichungsnummer:
**WO 2005/087627 (22.09.2005 Gazette 2005/38)**

(54) **ROLLENDE FÖRDERVORRICHTUNG**

ROLLING CONVEYING DEVICE

DISPOSITIF DE TRANSPORT ROULANT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.03.2004 CH 456042004**

(43) Veröffentlichungstag der Anmeldung:
**29.11.2006 Patentblatt 2006/48**

(60) Teilanmeldung:
**10007422.8 / 2 233 411**

(73) Patentinhaber: **WRH Walter Reist Holding AG 8272 Ermatingen (CH)**

(72) Erfinder: **REIST, Walter CH-8340 Hinwil (CH)**

(74) Vertreter: **Frei Patent Attorneys
Frei Patentanwaltsbüro AG
Postfach 1771
8032 Zürich (CH)**

(56) Entgegenhaltungen:

| | |
|---|---|
| **EP-A- 0 139 287** | **EP-A- 0 338 500** |
| **DE-B- 1 273 415** | **JP-A- 5 231 432** |
| **US-A- 3 595 377** | **US-A- 3 690 433** |
| **US-B1- 6 269 942** | **US-B1- 6 554 126** |

**Beschreibung**

Die Erfindung liegt im Gebiet der Fördertechnik und betrifft eine Fördereinrichtung zum Fördern von Material, Objekten und so weiter, wobei diese Vorrichtung mit beliebigen Mitteln zur Material oder Objektaufnahme ausgestattet werden kann. Die Erfindung zeichnet sich aus, dass mit wenigen, günstigen Mitteln beliebige Förderwege oder -bahnen geschaffen werden können, in denen eine fliessende Förderung stattfinden kann.

DE 12 73 415 B offenbart eine Fördereinrichtung für in einer Führungsbahn laufende und durch Wälzkörper gelagerte Transportschlitten für Montage- oder Bearbeitungsstrassen. Damit sollen die Abstände zwischen den Transportschlitten exakt gleich bleiben, und in kreisbogenförmigen Bahnabschnitten sollen die Mittelpunkte der Transportschlitten exakt entlang eines Kreisbogens laufen. Dazu laufen die Transportschlitten spielfrei aneinandergrenzend in der Führungsbahn und sind für die kreisbogenförmigen Bahnbschnitte besondere Führungsflächen an den Transportschlitten vorgesehen.

EP 0 139 287 A zeigt eine endlose, umlaufendes und einer Schiene geführte Förderkette eines Stetigförderers. Zwischen der Schiene und der Förderkette ist beidseits der Kette jeweils eine Reihe Kugeln als Wälzkörper angeordnet. Die Kugeln sind zwischen Führungssegmenten der Kette und der Schiene gehalten, können aber auch durch Kugelkäfige oder Distanzstücke voneinander beabstandet sein.

EP 0 338 500 A zeigt eine Handhängebahn für die Bekleidungsindustrie, bei welcher einzelne Tragelemente in ein Schiene eingelegt und durch Rollen gelagert sind. Bei einem Tragelement sind die Achsen der Rollen symmetrisch zueinander und zur Senkrechten geneigt sind, so dass das Tragelement dadurch in der Schiene zentriert wird.

US 3,690,433 offenbart Förderplatten in einem Werkzeugmaschinensystem, welche auf Rollenketten laufen. Die Rollenketten weisen mehrere Rollensätze auf, welche senkrechte und waagrechte Kräfte aufnehmen.

US 3,595,377 zeigt ein Fördersystem mit miteinander verketteten Elementen, die mittels beidseits angeordneter Kugeln in einer Förderbahn gelagert sind.

EP 0 838 602 und US 6,203,200 beschreiben Schlitten für Werkzeugmaschinen, die mittels umlaufender Rollenkörper gelagert sind. Die einzelnen Rollen sind mittels elastischer Kunststoffkörper gelagert und miteinander kettenartig verbunden.

JP 5 231 432 A zeigt eine Fördervorrichtung gemäss dem Oberbegriff des Anspruchs 1, die aus einer Führungsschiene und miteinander quer zur Förderrichtung verbundenen Rollenkörpern mit Kugeln als Wälzkörper besteht.

Eine erfindungsgemässe Fördervorrichtung ist in Patentanspruch 1 beschrieben.

Die Erfindung besteht im wesentlichen aus wenigen Teilen, nämlich: aus ein oder zwei Führungsschienen, in denen ein Rollenkörper oder Rollenverbund mit einer Vielzahl von frei drehenden Rollen, Kugeln, Walzen usw. angeordnet ist und mit einer Mehrzahl von an oder zwischen den Rollen des Rollenkörpers verschiebbaren Förderkörpern. Die Rollenkörper können bspw. in sich geschlossene Strecken bilden, sind aber keine Ketten, weil sie nicht wie solche weder gezogen noch gestossen werden.

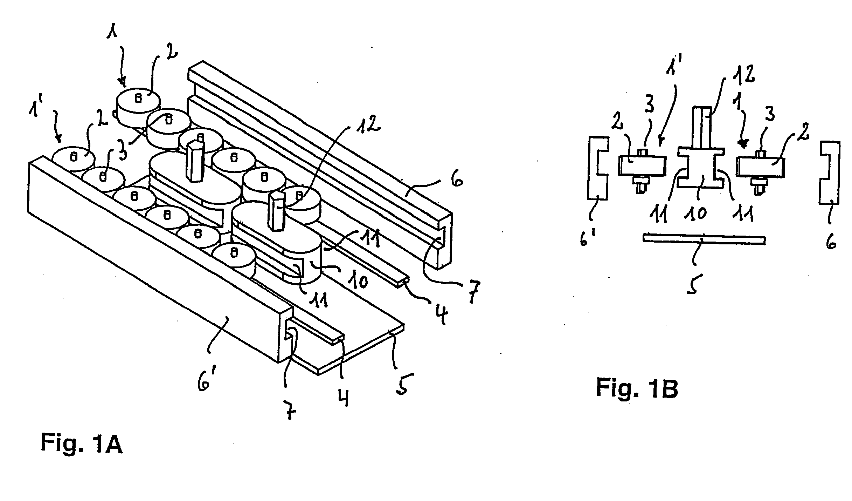

**Figur 1A** und **1B** zeigen in einer Explosionszeichnung ein Teilstück bzw. Bahnteil einer beispielhaften Fördervorrichtung, die zum Verständnis der Erfindung dient . In diesem Beispiel weist die eine Führungsschiene 6 eine Eingriffs- oder Führungsnut 7 auf, in welchen die Rollen 2 des Rollenkörpers 1 frei rollen können. Der Rollenkörper als Rollenverbund besteht aus einem Verbindungsteil 4, auf welchem eine Vielzahl von Rollen 2 auf Achsen 3 frei drehbar angeordnet sind. Die gleiche Anordnung von Führungsschiene 6' und Rollenkörper 1' mit Rollen 2 ist spiegelbildlich als Gegenstück nochmals vorhanden. Dazwischen erkennt man zwei (von einer Vielzahl) Förderkörper 10, welche auf beiden Seiten längsseits eine Eingriffs- oder Führungsnut 11 für den freien und unangetriebenen Lauf der Rollen 2 aufweisen, um in eine Wirkverbindung mit den Rollenkörpern 1 und 1' und den Schienen 6 und 6' zu kommen, welche letztere in dieser gezeigten Ausführungsform sich von Schiene 6 zu Schiene 6' erstreckt und eine rollende Verschiebung der Förderkörper 10 zulässt. Die Rollen 2 greifen zwischen 1/5 bis 1/3 des Durchmessers der verwendeten Rollen in die jeweilig Führungsnut 7 und 11 ein. Der Förderkörper 10 weist, schematisch dargestellt, eine Aufnahme 12 zur Befestigung von bspw. einer Klammer für zu transportierendes Gut auf. Nicht dargestellt sind: ein bzw. mehrere Antrieb/e, mit welchem bzw. welchen die Förderkörper 10 bewegt bzw. angetrieben werden. Eine Verbindungsplatte 5, mittels welcher die beiden Führungsschienen 6 und 6' zusammen und auf gleiche Distanz gehalten werden, ist darunter eingezeichnet. Wie gesagt, zeigen alle Figuren nur ein Stück aus einer beliebig langen und beliebig geführten Förderstrecke. Varianten davon werden anschliessend an die Figurenlegende diskutiert.

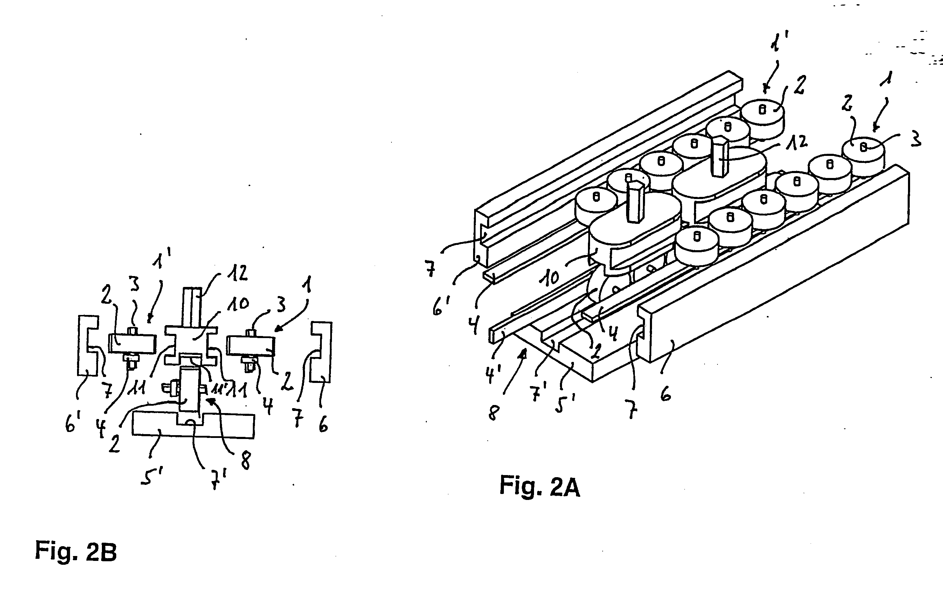

Der Rollenkörper 1 bzw. 1' und in einer weiteren Ausführungsform der Vorrichtung der Rollenkörper 8 (siehe Fig. 2A und 2B) kann folgendermassen gestaltet sein: das Verbindungsteil 4 wird aus einem elastischen Material hergestellt, in welchem die Achsen 3 für die Rollen 2 befestigt sind. Die Achsen 3 weisen einen (hier nicht dargestellten) Sitz auf, der verhindert, dass die Rollen 2 mit dem Verbindungsteil 4 in Berührung kommen, mit andern Worten, dass die Rollen 2 frei drehbar sind. Die Rollen 2 sind auf die Achsen 3 aufgesteckt und am oberen Ende der Achsen 3 adäquat gegen eine Loslösen von dieser befestigt. In dieser Ausführungsform können sich die Rollenkörper jeder Bahnform der Führungsschienen 6, 6' anpassen. Als Materialien können für den Verbindungsteil 4 bspw. Kunststoffbänder verwendet werden, für die Rollen 2 ist ein Hartkunststoff und für die Achsen 3 Metallstifte ein brauchbarer Werkstoff.

Aus dem gleichen Material wie die Rollen 2 können die Förderkörper 10 hergestellt werden. Diese Förderkörper werden gemeinsam angetrieben, wobei einer den anderen stösst. Für solch einen Antrieb kann ein Eingriff von unten durch die Verbindungsplatte 5 oder seitlich an der Abnahme 12 mittels bspw. mehreren distant zu einander angeordneten Förderantriebe vorgesehen sein.

Wesentlich ist, dass der Eingriff der Rollen 2 in die Führungsnuten 11 ein relativ grosses Spiel aufweisen darf, ohne dass die Betriebsfähigkeit in Mitleidenschaft gezogen wird. Dies gibt bei der Herstellung die Möglichkeit, ohne grosse Präzision massenweise Bauteile für die Vorrichtung herzustellen, was sich sehr positiv auf der Kostenseite auswirkt. Und trotz diesem für mechanische Bauweise verhältnismässig lockeren Zusammenbau laufen die Förderkörper seidig weich und fast fliessend, sodass von einer Art fliessender Fördertechnik gesprochen werden kann.

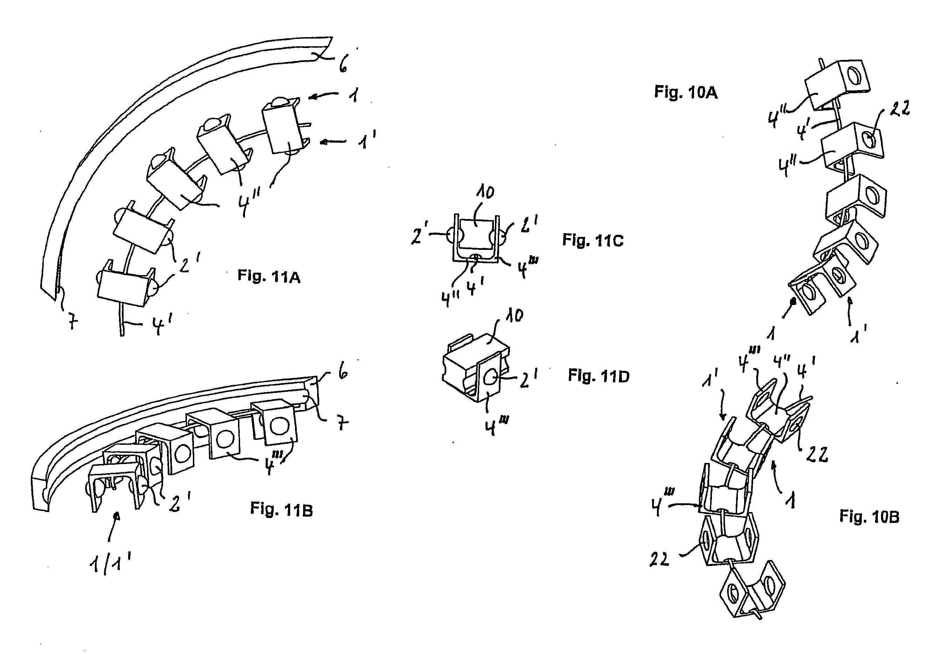

Im folgenden wird der oben diskutierte Erfindungsgegenstand anhand von bevorzugten Ausführungsbeispielen, welche in den beiliegenden Zeichnungen dargestellt sind, näher erläutert. Dabei entsprechen die Figuren 10A, 10B, 11A und 11B der Erfindung, die übrigen Figuren dienen besseren Verständnis der Erfindung. Es zeigen:

Figuren 1A      und 1B die oben beschriebene Fördervorrichtung

Figuren 2A      und 2B ein Teilstück einer Fördervorrichtung mit drei Rollenkörpern zum Führen der Förderkörper,

Figuren 3A      3B und 3C ein Teilstück einer weiteren Fördervorrichtung mit einem stilisiertem Antrieb für die Bewegung der Förderkörper,

Figuren 4A      4B und 4C eine Fördervorrichtung mit einem Rollenverbund von Kugeln an Stelle von Rollen,

Figuren 5A      5B und 5C eine Fördervorrichtung mit einem stilisierten Antrieb für die Förderkörper,

Figur 6      eine andere Fördervorrichtung mit einem stilisierten Antrieb für die Förderkörper.

Figuren 7A      7B und 7C eine Reihe von Förderkörpern in einer Raumkurve,

Figur 8      Förderkörper mit einer speziellen Form von Gelenkverbindung untereinander,

Figuren 9A      und 9B die Fördervorrichtung als geschlossene Bahn.

Figuren 10A      und 10B eine Ausführungsform des Rollenkörpers mit Verbindungskörpern, gemäss der Erfindung die sich speziell für enge Kurvenradien eignet.

Figuren 11A      und 11B diese Ausführungsform gemäss der Erfindung, dargestellt mit eingefügten Wälzkörpern und einer der beiden Führungsschienen.

Figuren 11C      und 11D ein Element des Rollenkörpers mit eingesetzten Kugeln und einem Führungskörper in Frontalsicht und perspektivisch dargestellt.

Figuren 12A      und 12B und 12C eine weitere Ausführungsform der drei Elemente, ein Führungskörper der beide Führungsschienen aufweist, also Führungsschiene, Rollenkörper und Förderkörper, bei der eine Führungsschiene auch die Funktion der zweiten Führungsschiene übernehmen kann.

Figuren 13A      und 13B und 13C eine Ausführungsform in Anlehnung an die Ausführungsform nach Figur 4, bei der die Rollenkörper auch aus Wälzkörpern ohne gegenseitige Verbindung bestehen.

Die in den Zeichnungen verwendeten Bezugszeichen und deren Bedeutung sind in der Bezugszeichenliste zusammengefasst aufgelistet. Generell sind in den Figuren gleiche oder analoge gleichwirkende Teile mit gleichen Bezugszeichen versehen.

Dabei ist folgendes zu bemerken: die Darstellungen sind skizzenhaft und keine fertigen Konstruktionen und alle körperlichen Darstellungen sind Teilstücke eines Ganzen. Das Ganze kann jeweils eine in sich geschlossene Bahn sein, in welcher die Rollenkörper, die Reihe der Förderkörper und die Führungsschienen jeweils in sich zurückführen.

Die Figuren 2A und 2B zeigen in einer Explosionszeichnung ein Teilstück einer anderen Ausführungsform der rollenden Fördervorrichtung. Zusätzlich zu der in den Figuren 1A und 1B gezeigten Ausführungsform ist ein dritter Rollenkörper 8 (ausnahmsweise nicht mit 1 bezeichnet aber vorteilhafterweise dieselbe Fertigung wie die Rollenkörper 1) unterhalb der Förderkörper 10 angeordnet, deren Lage in der Frontansicht gemäss Figur 2B gut zu sehen ist. Die Förderkörper 10 weisen zur Führung der Rollen 2 des Förderkörpers 8 eine Eingriffs- oder Führungsnut 11' auf. Gleicherweise weist die modifizierte Verbindungsplatte 5' eine Eingriffs- oder Führungsnut 7', analog zu den Führungsschienen, auf. Die Tiefe der Führungsnut 11' in den Förderkörpern 10 kann weniger als 1/5 des Durchmessers der verwendeten Rollen betragen. Es ist auch denkbar, dass man sie an den Förderkörpern ganz weglässt und die Rollen 2 nur zur Abstützen einer Last dienen. Diese Ausführungsform ist bspw. für schwere Lasten geeignet, wo der zusätzliche Rollenkörper 8 einen wesentlichen Teil der Last aufnehmen kann. Dazu kann die Ausführung der Rollen 2 bzw. des Rollenkörpers 8 als Rollenverbund speziell für höhere Lasten ausgebildet werden. Das gleiche gilt für die Führungsschienen 6,6',5.

Diese Ausführungsform eignet sich zum Beispiel für eine konturorientierte Förderung, das heisst über Niveaus hinweg, von Gegenständen wie Pakete in Postpaketverteilzentren oder Reisegepäck an Flughäfen. Die fliessende, ruckfreie, undiffizile und möglichst stetige Förderung mittels einer kostengünstigen Anlage ist stets ein Anliegen aus dem Markt, was mit solch einer Vorrichtung gemäss Erfindung bewerkstelligt werden kann.

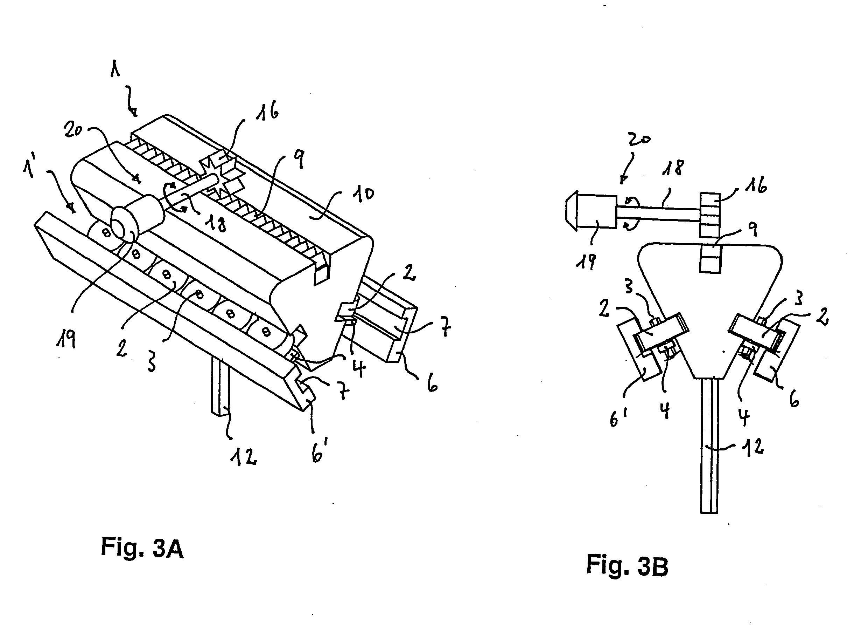

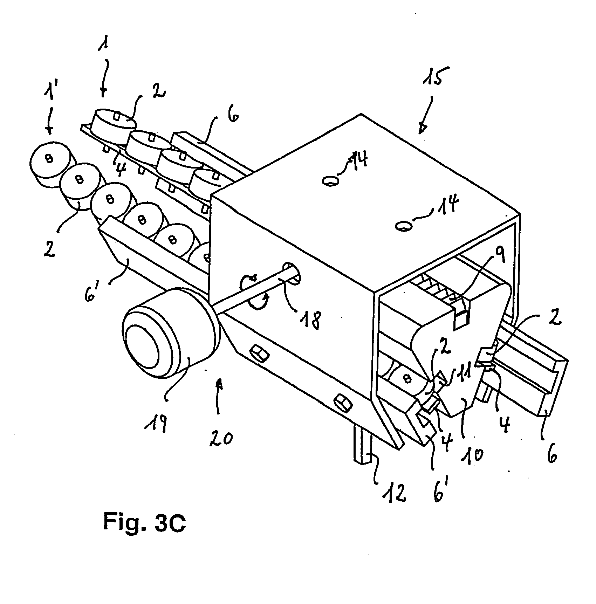

Die Figuren 3A, 3B und 3C zeigen in einer Explosionszeichnung ein Teilstück einer weiteren Ausführungsform. Der Förderkörper 10 ist in Form einer Art Prisma mit im wesentlichen 60 Grad Winkeln ausgestaltet. Die beiden Rollenkörper 1 und 1' sind orthogonal zur Oberfläche des Förderkörpers angeordnet, so dass sie selber zueinander geneigt sind (im wesentlichen spannen sie einen 120 Grad Winkel auf). An der 'spitze' zwischen den Rollen 2 ist eine Aufnahme 12 zur Befestigung eines Mittels, bspw. einer Klammer, eines Hakens oder dergleichen angeordnet. In der gegenüberliegenden Flachseite ist eine Förderverzahnung 9 zu sehen und darüber, stilisiert, eine Antriebseinheit 20 mit einem Antriebsmotor 19, der über eine Welle 18 ein hier sternförmiges Antriebsrad 16 in beide Drehrichtungen, siehe Doppelpfeil, antreiben kann. Solche Antriebseinheiten 20 sind bei längeren Förderstrecken über die gesamte rollende Fördervorrichtung verteilt angeordnet. Es ist vorteilhafter an Stelle einer einzigen Antriebseinheit deren mehrere über die Strecke verteilt vorzusehen. So ist eine 'Lückenverteilung' zu erwarten an Stelle einer einzigen grösseren Lücke gleich hinter dem einzigen Antrieb. Dabei ist natürlich zu beachten, dass jede Antriebseinheit dieselbe Fördergeschwindigkeit in das System einbringt, was mit den heutigen Mitteln für die Steuerung von Motoren kein Problem ist.

Diese Ausführungsform ist beispielsweise geeignet, um an der Decke eines Raumes angeordnet zu werden. Figur 3C zeigt eine Deckenbefestigung 15, welche bspw. wie ein an den Schenkeln zusammengebogenes U aussehen kann und das an seiner Oberseite Befestigungslöcher 14 aufweist, durch welche sie an der Decke befestigt werden kann. Im Bereich der Führungsschienen erkennt man Befestigungsschrauben, mit welchen die Deckenbefestigung mit den Führungsschienen verbunden ist. Solche Befestigungen können, wie die Figur das zeigt, gleich mit einem Antrieb kombiniert werden. Auch eine solche Ausführungsform von Aufhängung und Antrieb kann über die gesamte Förderstrecke verteilt angeordnet werden.

Die Figuren 3A, 3B, 3C zeigen in stilisierter Form je ein Teilstück der rollenden Fördervorrichtung mit nur einem Förderkörper von vielen, und je im Detail die Rollenkörpern 1,1'und die Führungsschienen 6,6' und ein Antrieb 20 mit einer Abdeckung 15, welche letztere als Aufhängevorrichtung gedacht ist und in Abständen entlang der ganzen Förderbahn angeordnet sein können.

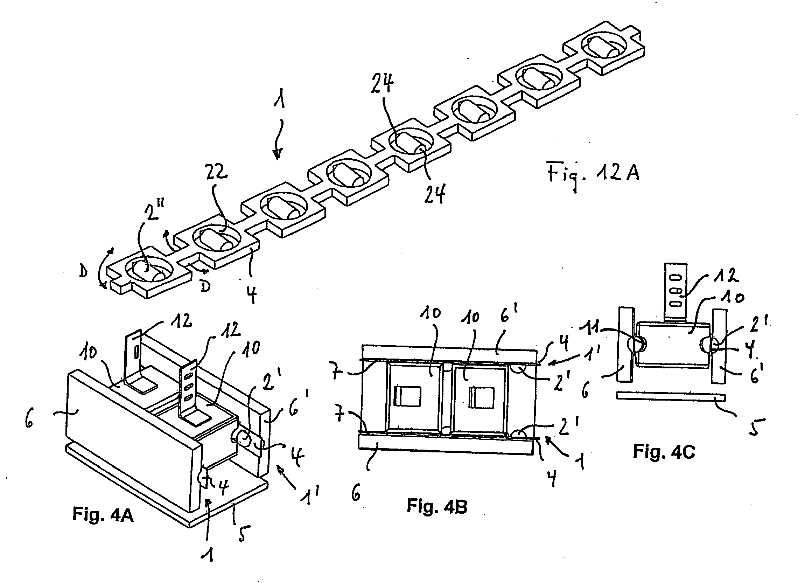

Die **Figuren 4A** und **4B** und **4C** zeigen eine weitere Ausführungsform, in welchen als Rollenverbund statt Rollen Kugeln 2' (analog zu den Rollen 2) verwendet werden. In den Figuren 4A und 4B sind die Förderkörper 10 etwas auseinandergezogen gezeichnet, damit man durch die entstandene Lücke die Kugeln sehen kann. Zusammengebaut weisen die sich schiebenden Förderkörper untereinander keine wesentliche Lücke auf; der Spalt zwischen den Führungsschienen 6 und 6' und den Förderkörpern 10 beträgt in etwa 1/3 des Durchmessers der verwendeten Kugeln. Die Führungsnuten 7,11 sind selbstverständlich der Kugelform angepasst. Ferner erkennt man (Fig. 4A) an den Rollenkörpern 1,1' die Verbindungsteile 4 zur Aufnahme der Kugeln 2'.

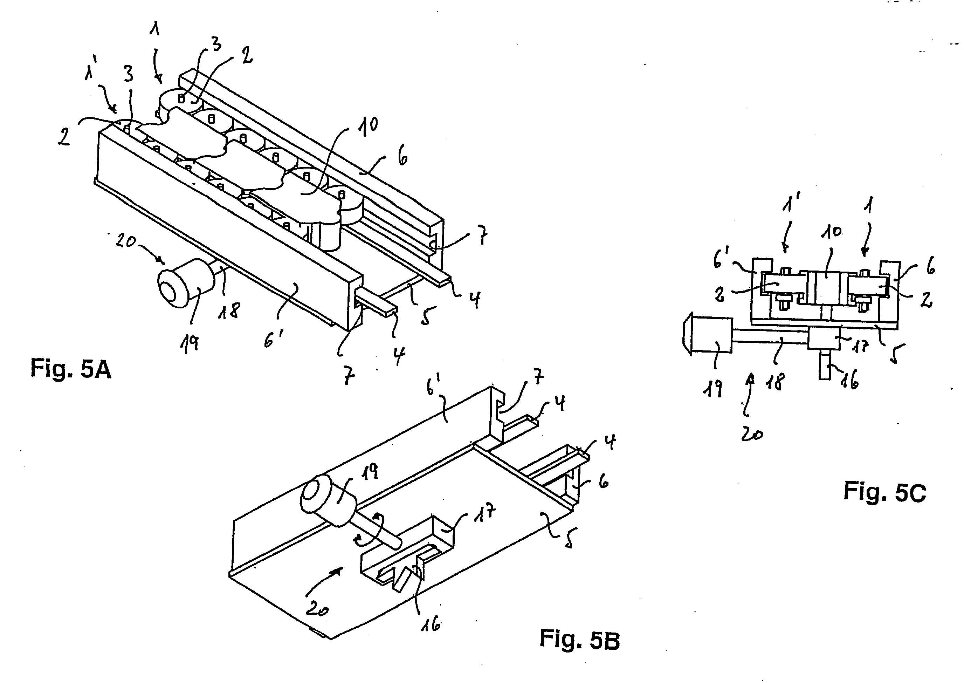

**Figuren 5A, 5B** und **5C** zeigen eine stilisierte Darstellung eines möglichen Antriebes 20 für die gezielte Verschiebung der Förderkörper 10, an welchen hier nicht dargestellte Manipulatoren für das Produkt, bspw. Greifer für flächige Objekte angebracht werden können. Eine hier sternförmige, in einem Befestigungsblock 17 geführte Antriebsscheibe 16, welche an der unteren Seite der Förderkörper 10 eingreift (siehe als Beispiel die Förderverzahnung 9 in Figur 3A und Figur 5C), wird über eine Antriebswelle 18 von einem Antriebsmotor 19 angetrieben. Natürlich sind auch andere Arten des Eingriffs zwischen Antrieb und Angetriebenem denkbar, wie bspw. Verzahnungen, wie sie bei Zahnrädern verwendet werden. Der Antrieb wird nach Bedarf gesteuert. Er kann bedarfsweise in zwei Drehrichtungen antreiben, siehe Doppelpfeil, sodass die Förderkörper 10 in der Figur nach links oder nach rechts verschoben werden können. Als Antrieb in der Fördervorrichtung ist die Förderung der gesamten Mehrzahl der von Förderkörpern 10 gebildeten, in sich geschlossenen Bahn gemeint. Einzelne Antriebseinheiten 20 können an verschiedenen Stellen dort angebracht sein, wo, je nach Länge der Förderbahn ein weiterer Antrieb benötigt wird, dies auch zur oben schon erwähnten 'Lückenverteilung'.

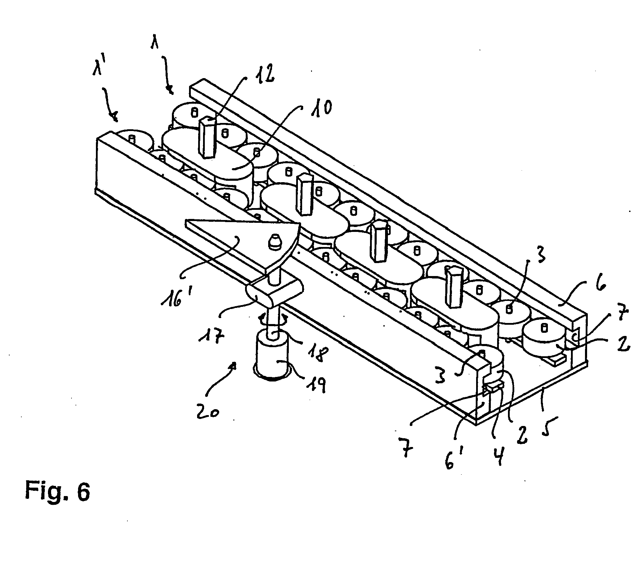

**Figur 6** zeigt eine stilisierte Darstellung eines weiteren möglichen Antriebes 20 für die gezielte Verschiebung der Förderkörper, an welchen Manipulatoren für das Produkt, bspw. Greifer für flächige Objekte angebracht werden können. Eine hier sektorförmige Antriebsscheibe 16', analog zu den sternförmigen Antriebsräder 16, wird über eine Antriebswelle 18 von einem Antriebsmotor 19, bspw. ein Schrittmotor, angetrieben. Zu sehen ist eine stilisierte Halterung, hier ein Befestigungsblock 17, für die Antriebswelle 18. Der Antriebswinkel der Antriebsscheibe 16' wird nach Bedarf und situativ eingestellt. Er kann 360 Winkelgrade oder nur einen Teil davon betragen und dies in bedarfsweise zwei Richtungen (siehe Doppelpfeil), sodass die Förderkörper 10 in der Figur nach links oder nach rechts verschoben aber auch nur stückweise vorgerückt werden können, wenn bspw. eine exakte Positionierung im Stillstand erforderlich ist. Dabei handelt es sich um die Förderung von jeweils allen Förderkörpern simultan miteinander.

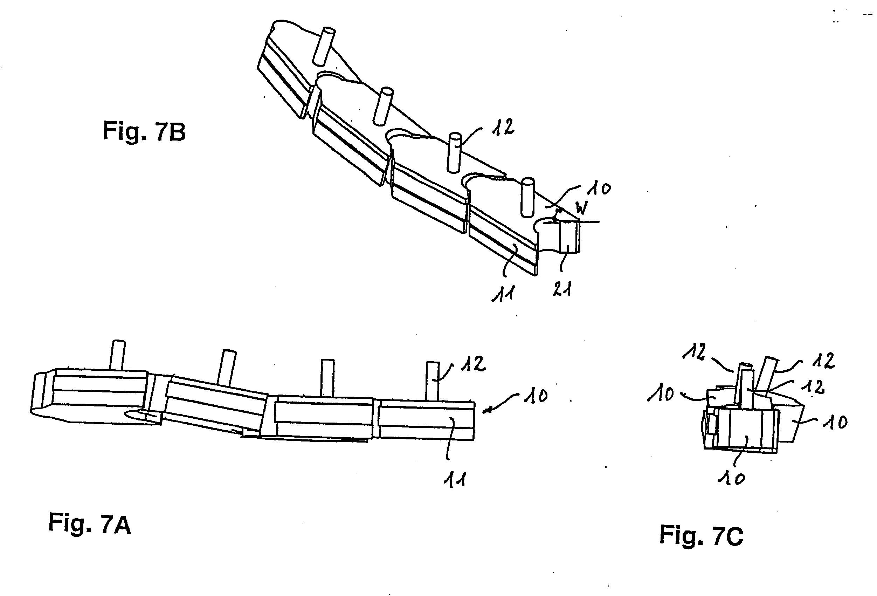

Die **Figuren 7A**, **7B** und **7C** zeigen einerseits eine beispielhafte vorgeschlagene Form von 4 Förderkörpern 10 aus der Mehrzahl aller und andererseits eine Aneinanderreihung dieser derart, dass sie bspw. im Eingriff miteinander in eine leichte Kurve einer auch in zwei Richtungen (zur Seite und nach oben) gekrümmten Bahn gefördert werden können. Die Förderkörper 10 weisen eine stilisierte Aufnahme 12 zur Befestigung eines Mittels auf, an welchen bspw. Manipulatoren angebracht werden können. Sichtbar sind auch die Führungsnuten 11 für den Eingriff der Rollen 2 der Rollenkörper 1 und 1'. Da die Förderkörper 10, wenn sie nicht aneinander gekoppelt sind, immer gestossen und nicht gezogen werden, ist es vorteilhaft durch Formgebung der Berührungsstellen zweier Förderkörper durch Anschrägungen 21 in einem bestimmten Winkel W zur Aussenkante, diesen die Eigenschaft eines beweglichen verlängerten Förderkörpers zu geben. Figur 7C zeigt die Frontansicht der Reihe, die Taumelbewegung der Förderkörper auf ihrer zweifach gekrümmten Bahn ist hier gut sichtbar.

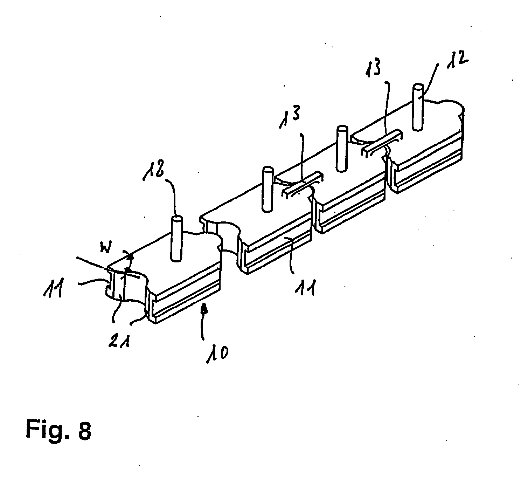

Figur 8 zeigt eine weitere beispielhafte Ausführungsform, ähnlich wie in den Figuren 7A, 7B, 7C, doch für kleinere Radien in den Förderbahnen. Ein vierter Förderkörper ist mit einem grösseren Abstand von den anderen dargestellt, um die Formgebung im Bereich, wo die Förderkörper aufeinander stossen, besser sichtbar zu machen. Die Anschrägungen 21 weisen zur Längskante des Förderkörpers einen grösseren Winkel W auf, als die bei den Figuren 7 A,B,C der Fall ist. Als weitere Ausführungsform sind drei Förderkörper 10 als Beispiel für alle Förderkörper 10 einer Vorrichtung über ein Verbindungsmittel 13, bspw. eine elastische Verbindung zusammengehängt. Dies erleichtert die Montage und auch die Manipulation bei einer allfälligen Revision, man muss nicht Einzelteile zu einer Bahn zusammenfügen, die in eine bestimmte Richtung zueinander zwischen die Rollenkörper eingeführt werden müssen. Die Führungskörper können auch allseitig, bspw. Kugel-Kalotte oder gegenseitig, wie in Figur gezeigt, abgestützt sein, um Kräfte aufnehmen zu können.

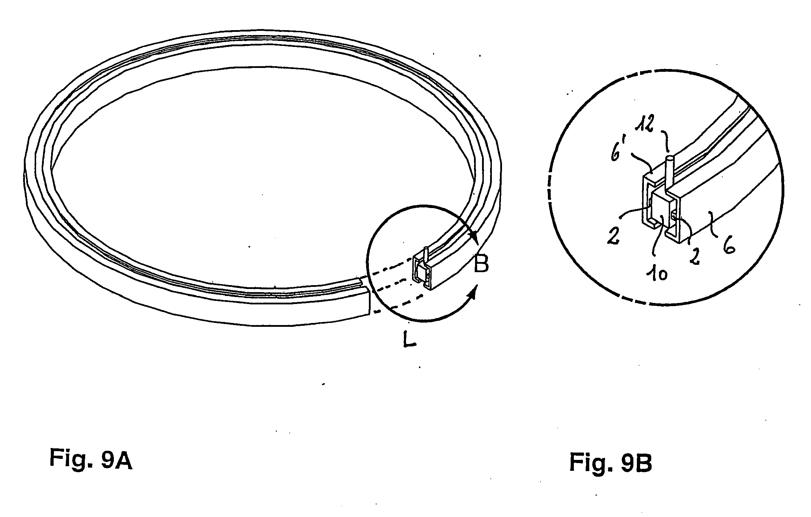

Die **Figuren 9A** und **9B** zeigen ein Beispiel einer in sich geschlossenen Bahn. Wie oben schon darauf hingewiesen, führen die Teile Führungsschienen 6,6' und Rollenkörper 2,2' und Förderkörper 10 als geschlossene Bahn in sich zurück und bilden so eine geschlossene, räumlich beliebig geführte Bahn. In Figur 9A ist dies bspw. eine ringförmige Bahn, die an einer Stelle aufgeschnitten eine Lücke L aufweist, um, wie in der Detailfigur 9B die hier ebenfalls stilisierten Bestandteile Führungsschienen 6,6', Rollenkörper mit Rollen 2 und Förderkörper 10 mit der Aufnahme 12 eines Befestigungsmittels zeigen zu können. Diese Teile sind vergrössert in der Detailzeichnung 9B zu sehen.

Die **Figuren 10A** und **10B** zeigen eine Ausführungsform der Erfindung bei welcher die Rollenkörper 1,1 und die Verbindungsteile 4''' eine Einheit bilden und diese über einen Verbindungskörper 4" und mittels eines Verbindungsmittels 4' untereinander verbunden sind. Diese Ausführungsform eignet sich besonders für eine Förderung um Kurven mit kleinen Radien. Figur 10A zeigt eine Krümmung in einer ersten Krümmungsrichtung und Figur 10B eine (um 90 Grad gedrehte) zweite Krümmungsrichtung. Daraus lässt sich auch eine weitere Krümmungsrichtung 180 Grad entgegengesetzt zu Figur 10A und entsprechend zu Fig. 10B ersehen. Damit kann mit dieser Ausführungsform nicht nur auf mit Kurven gekrümmten sondern auch auf spiralförmigen Bahnen gefördert werden.

Verbindungsteil 4''' und Rollenkörper 1,1' bilden eine Einheit; jeder einzelne Teil weist in diesen Figuren zwei Aufnahmen 22 zur Aufnahme bzw. dem Einbau je eines Wälzkörpers, nämlich Rollen 2, Kugeln 2', Zylinder 2" usw.auf, wobei eine Mehrzahl von solcherart angeordneten Wälzkörpern je einen ersten und zweiten Rollenkörper 1 bzw. 1' bilden. Eine Mehrzahl von solchen Teilen sind mittels eines Verbindungsmittels 4' gelenkig miteinander verbunden . Der Abstand zwischen den Einheiten, der je nach Anwendungsfall gewählt werden kann, hat einen direkten Einfluss auf den zu bewältigenden Kurvenradius. Man erkennt gut in Figur 10B, dass bei dieser 'Biegung' die Abstände klein sein können und man erkennt in Figur 10A, dass diese Abstände durch die Bauform der Förderkörper begrenzt wird, dies umso mehr, wenn die über den Verbindungskörper 4" verbundenen Rollenkörper 1,1' um 180 Grad verdreht zu Figur 10A in Biegung gebracht werden.

Die **Figuren 11A** und **11B** zeigen die eben diskutierte Ausführungsform mit als Kugeln 2' ausgebildeten Wälzkörper und zudem mit einer 6 von den beiden Führungsschienen 6,6'. Figur 11A zeigt die Kurve von oben, wobei im betriebsfähigen Zustand die Kugeln natürlich in die Führungsnut 7 eingreifen. Aus einer anderen Perspektive in Figur 11B erkennt man die Führungsnut aber wegen der perspektivischen Verzeichnung nicht mehr alle Kugeln 2' der Rollenkörper 1,1'. Doch ist diese Darstellung geeignet, um zu zeigen, wie eine Fördervorrichtung dieser Art zusammengebaut werden kann.

Die **Figuren 11C und 11D** zeigen ein Element oder Teil des/der Rollenkörper/s 1,1' mit eingesetzten Kugeln 2' als Wälzkörper und mit einem dazwischen angeordneten, einfach dargestellten Förderkörper 10.

**Figur 12A** zeigt einen Rollenkörper 1 bzw 1 mit Wälzkörpern, hier Rollen 2 oder Zylinder 2", (auch Kugeln 2' können eingesetzt werden) bei denen die Rollenachse durch zwei gegenüberliegende spitze Kegel 24 ersetzt ist. Diese Wälzkörper sind in einen Verbindungsteil 4 eingebracht, welcher Aufnahmen 22 für beliebige Arten von Wälzkörpern, Rollen, Kugeln, Zylindern etc. aufweist. Dieser Rollenkörper 1 ist vorzugsweise elastisch aber nicht weichelastisch gestaltet, damit er biegbar um Kurvenradien laufen kann, dargestellt mit Doppelpfeilen in verschiedene Richtungen, aber doch so fest ist, dass die eingesetzten Rollen 2 oder Zylinder 2" einen sicheren Halt haben. Ein solcher Rollenkörper kann in beliebiger Länge hergestellt sein; er kann auch standardisierte Längen aufweisen und abschnittsweise zwischen Förderkörper 10 und Führungsschienen 6,6' angeordnet werden. Anschliessend wird eine interessante Anwendung eines solchen Rollenkörpers diskutiert.

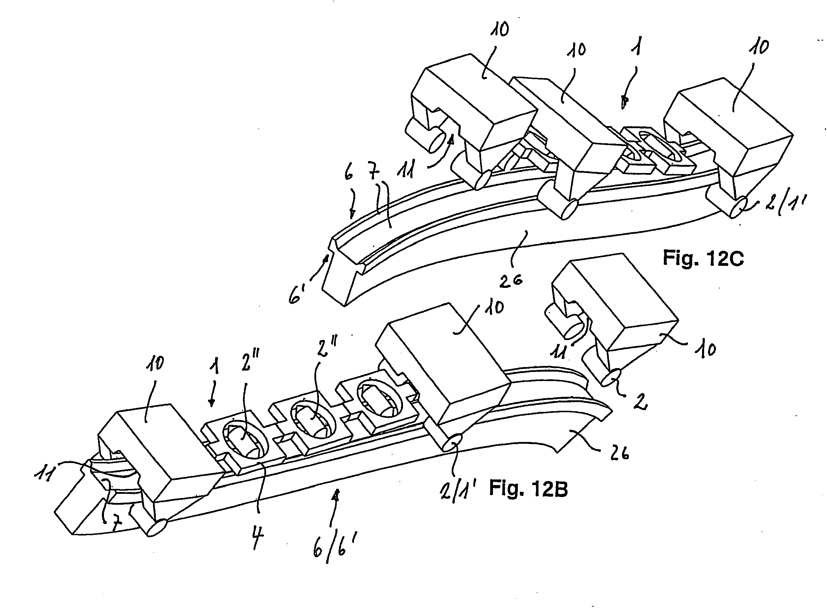

Die **Figuren 12B** und **12C** zeigen nun eine Anwendung des Rollenkörpers gemäss Figur 12A aus zwei Perspektiven. Man erkennt einen Führungskörper 26, der zwei Führungsschienen 6 und 6' aufweist. Die Führungsschienen 6,6' sind gebogen und hier einstückig ausgeführt, mit andern Worten, der Führungskörper 26 ist so ausgestaltet, dass auf der einen Seite die eine und auf der anderen Seite die andere Führung für die Förder- und Rollenkörper angeordnet oder angeformt sind. Die Förderkörper 10 weisen entsprechend dieser Einstückigkeit eine Führungsnut 11 zum Abrollen der Wälzkörper 2" des Rollenkörpers 1 auf der einen Seite der Führungsschiene, nämlich dem Teil 6 und, stilisiert dargestellt, auf der andern Seite, also gegenüber, Rollen 2, es können auch fixe Rollen (Gleiter) sein, welche auf der Führungsschiene, nämlich dem Teil 6' entlang laufen. Diese kompakte Ausführungsform ist besonders geeignet, wenn aus Platzgründen, bspw. Mauerdurchgänge oder entlang von Wänden oder bei Überwindung von Stockwerken oder bei spiralförmigem Bahnverlauf möglichst wenig Volumen-erlaubt ist. Für grössere Lasten beschwert man die Förderkörper 10 so, dass sie auf dem Rollenkörper 1 aufsitzt und für kleinere Lasten kann man den Hängebetrieb wählen, wo sie sich mit dem Rollenkörper 1' der Führungsschienen 6' entlang bewegen.

Beide Figuren zeigen drei Förderkörper 10 in verschiedenen Positionen. Ein erster Förderkörper ist im Eingriff mit der Führungsschiene 6 auf der einen Seite und mit der Führungsschiene 6' auf der ändern Seite. Zwischen der Führungsnut 11 des Förderkörpers 10 und der Führungsnut 7 der Führungsschiene 6 wird dann der Rollenkörper 1, von dem ein Teilstück dargestellt ist, eingeschoben, auf der Gegenseite befindet sich der Rollenkörper 1', aufgeteilt über die Rollenkörper, mit Rollen 2 im Eingriff mit der Führungsschiene 6'. Der Zwischenraum für den Rollenkörper 1 ist in Figur 12B gut zu sehen. Ein zweiter Förderkörper ist nicht im Eingriff mit der Führungsschiene, aber der Rollenkörper 1 liegt nahe der Führungsnut 11, was in Figur 12C gut zu sehen ist. Ein dritter Förderkörper ist ohne Eingriffe über der Führungsschiene 6 gezeichnet, sodass man dessen Ausgestaltung gut erkennen kann. Diese Darstellung wurde gewählt, um einerseits die Eingriffe der Teile ineinander und andererseits die Teile selber gut darstellen zu können. Selbstverständlich ist bei einer Anlage die Länge einer Bahn mit den Rollenkörpern und einer beliebigen Anzahl Förderkörper so bemessen, wie sie eben gewünscht ist.

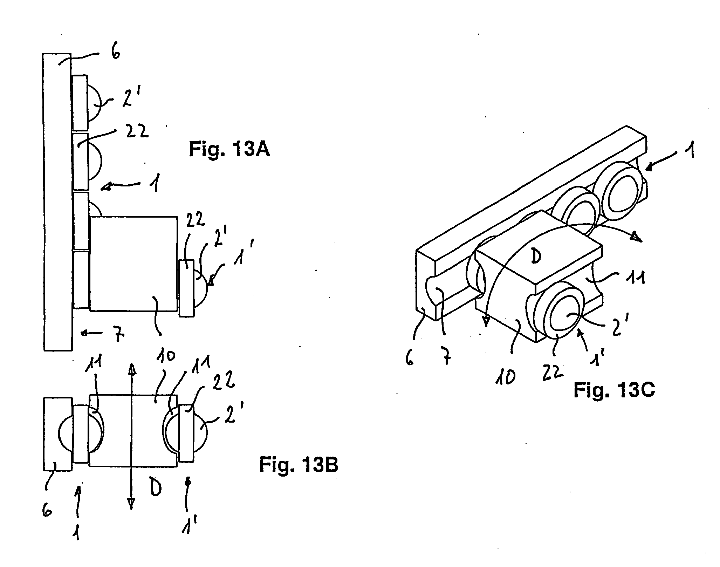

Die **Figuren 13A**, **13B** und **13C** zeigen eine weitere Ausführungsform, bei der die Rollenkörper 1,1' aus einer Mehrzahl von untereinander nicht verbundenen Wälzkörpern, hier Kugeln 2' in einem Abstandskäfig 27 (mit Aufnahme für Wälzkörper 22) besteht, die so angeordnet sind, dass sie nahe zueinander und zwischen Förderkörper 10 und Führungsschiene 6 liegen. Diese Ausführungsform lehnt sich an die Ausführungsform von Figur 4 an, zeigt aber eine Besonderheit, welche bei Krümmungen der Bahn eine Rolle spielt. Die Wälzkörper, hier Kugeln 2', sind drehbar im Abstandskäfig 27 und der ringförmigen Aufnahme 22 für Wälzkörper angeordnet. Der Abstandskäfig 27 dient nicht nur zur Aufnahme der Kugeln 2', er dient auch als Abstandhalter zwischen den Führungsschienen und den Förderkörpern, was Figur 13A gut zeigt. Figur 13B, die Frontalansicht von Figur 13A und zeigt den Förderkörper 10 mit Führungsnuten 11, welche durch besondere Ausgestaltung zwischen Kugel 2' und Nut ein Spiel derart aufweisen, dass der Förderkörper 10 in Richtung des Doppelpfeils D quer zu den Führungsnuten 7,7' der Führungsschienen 6,6' (Führungsschiene 6' nicht dargestellt) verschoben werden kann, was in Form einer kleinen Dislokation des Förderkörpers 10 aus seiner Läangsachse gezeigt ist. Bei einer Krümmung der Führungsschienen, hier nach unten oder oben, können die starren, sich über zwei Kugeln 2' erstreckenden Förderkörper 10 gleichsam um den Bahnradius kippen was in Figur 13C mit einem Doppelpfeil D illustriert ist. Figur 13C zeigt in perspektivischer Sicht die prinzipielle Anordnung, wobei auf der Gegenseite der Führungsschiene 6 noch ein Kugelelement 2' des Rollenkörpers 1' einer gleichen Mehrzahl dargestellt ist, woran dann die zweite, nicht dargestellte Führungsschiene 6' anschliessen kann.

Eine Fördervorrichtung, kann also mindestens einen Förderkörper 10 sowie mit diesem in Wirkverbindung stehende Rollenkörper 1,1' aufweisen, mit einer Mehrzahl aber mindestens zwei Wälzkörpern wie Rollen, 2 Kugeln 2', Zylinder 2" etc. welche Rollenkörper 1,1' an Führungsschienen 6,6',5 und dem mindestens einen Förderkörper 10 so angeordnet sind, dass die Wälzkörper 2,2',2" bei Verschiebung des mindestens einen Förderkörpers 10 frei drehen können. Die Rollenkörper 1,1' bilden einen Rollverbund, der bspw. Rollen 2 und/oder Kugeln 2' oder Zylinder 2" usw. aufweisen kann. Die Vorrichtung kann zwei oder mehrere Rollenkörper 1,1' aufweisen. Zwei Rollenkörper 1,1' können im gestreckten Winkel bezüglich des Förderkörpers 10 einander gegenüber liegen. Dieser Winkel kann auch geknickt sein. Zu zwei Rollenkörpern 1,1' kann ein dritter Rollenkörper 8 derart angeordnet sein, dass er zusätzlich Lastkraft aufnehmen kann. Angetrieben werden in der Regel die Förderkörper 10, nicht die Rollenkörper 1,1',8. Der Rollverbund dient als rollende Abstützung für die geförderten Förderkörper 10 und sind zwischen diesen und den Führungsschienen 6,6',5 angeordnet. An den Förderkörpern 10 können verschiedenartige Mittel zum Transportieren von Fördergut angebracht sein. Sie können aber auch kettenartig verbunden sein.

Die drei Baugruppen, Führungsschiene, Rollkörper und Förderkörper werden je nach Anwendungsfall entsprechend ausgestaltet. Betrachtet man die absoluten gegenseitige Geschwindigkeiten zueinander, so ist:

$$V_{\text{Führungsschiene}} = 0$$

und

$$V_{\text{Rollkörper}} < V_{\text{Förderkörper}}$$

und sie sind formschlüssig verbunden, aber lose zueinander geführt, was einerseits günstige Herstellungskosten bewirkt und andererseits den Verschleiss vermindert.

BEZUGSZEICHENLISTE

| | |
|---|---|
| 1 | erster Rollenkörper, 1' zweiter Rollenkörper |
| 2 | Rollen |
| 3 | Rollenachsen |
| 4, 4''' | Verbindungsteil |
| 4' | Verbindungsmittel für die Rollenkörper |
| 4'' | Verbindungskörper |
| 5 Fördervorrichtung | Verbindungsplatte/Bodenplatte |
| 5' | dritte Eingriffs- bzw. Führungsnut |
| 6 | erste Führungsschiene, 6' zweite Führungsschiene |
| 7 | erste Eingriffs- bzw. Führungsnut, 7' zweite Eingriffs- bzw. Führungsnut |
| 8 | dritter Rollenkörper |
| 9 | Förderverzahnung |
| 10 | angetriebene Förderkörper |
| 11 | Eingriffs- bzw. Führungsnut am Förderkörper |
| 12 | Aufnahme zur Befestigung eines Mittels |
| 13 | Verbindungsmittel für die Förderkörper |
| 14 | Befestigungslöcher |
| 15 | Deckenbefestigung |
| 16 | Antriebsrad für die Förderkörper |
| 17 | Befestigungsblock |
| 18 | Antriebswelle |
| 19 | Antriebsmotor |
| 20 | Antriebseinheit |
| 21 | Anschrägung am Förderkörper |
| 22 | Aufnahme für Wälzkörper |
| 23 | Befestigung |
| 24 | Kegel |
| 25 | Kugelkäfig |
| 26 | Führungskörper |
| 27 | Abstandskäfig |

**Patentansprüche**

1. Fördervorrichtung, aufweisend:

   - mindestens einen Förderkörper (10);
   - Führungschienen (6, 6');
   - einen ersten und einen zweiten Rollenkörper (1, 1'), wobei jeder Rollenkörper (1, 1') aus einer Mehrzahl von Wälzkörpern (2, 2') besteht, wobei die Rollenkörper (1, 1') mit dem mindestens einen Förderkörper (10) und den Führungsschienen (6, 6') in Wirkverbindung stehen, wobei die beiden Rollenkörper (1, 1') zwischen dem mindestens einen Förderkörper (10) und den Führungsschienen (6, 6') so angeordnet sind, dass die Wälzkörper (2, 2') bei Verschiebung des mindestens einen Förderkörpers (10) frei drehbar sind, und wobei die beiden Rollenkörper (1, 1') einander bezüglich des mindestens einen Förderkörpers (10) im gestreckten Winkel gegenüberliegend angeordnet sind;

- mindestens einen Verbindungsteil (4''') mit einem Verbindungskörper (4''), wobei jeder Verbindungsteil (4''') eine Aufnahme zur Aufnahme eines Wälzkörpers (2, 2') des ersten Rollenkörpers (1), und eine Aufnahme zur Aufnahme eines Wälzkörpers (2, 2') des zweiten Rollenkörpers (1') aufweist, wobei der mindestens eine Verbindungsteil (4'''), der Wälzkörper (2, 2') des ersten Rollenkörpers (1) und der Wälzkörper (2, 2') des zweiten Rollenkörpers (1') eine Einheit bilden;

**dadurch gekennzeichnet, dass** die Fördervorrichtung mehrere untereinander verbundene solcher Einheiten aufweist, wobei die Verbindungskörper (4'') der Verbindungsteile (4''') mittels eines Verbindungsmittels (4') gelenkig miteinander verbunden sind.

2. Fördervorrichtung nach Anspruch 1, **dadurch gekennzeichnet, dass** der Verbindungsteil (4''') den Wälzkörper (2, 2') des ersten Rollenkörpers (1) und den Wälzkörper (2, 2') des zweiten Rollenkörpers (1') quer zur Förderrichtung miteinander verbindet.

3. Fördervorrichtung nach Anspruch 1, **dadurch gekennzeichnet, dass** die Rollenkörper (1,1') aus Kugeln (2') besteht.

4. Fördervorrichtung nach einem der vorangegangenen Ansprüche, **dadurch gekennzeichnet, dass** die Wirkverbindung zwischen Rollenkörpern (1,1') und dem mindestens einen Förderkörper (10) oder einer Mehrzahl von Förderkörpern (10) durch Eingriffs- bzw. Führungsnuten (7,11) für den Eingriff von Wälzkörpern (2,2') der Rollenkörper (1,1') in diese bewerkstelligt wird.

5. Fördervorrichtung nach Anspruch 1, **dadurch gekennzeichnet, dass** zwei Führungsschienen (6,6') eine Einheit bilden.

6. Fördervorrichtung nach Anspruch 5, **dadurch gekennzeichnet, dass** die Förderkörper (10) für den Eingriff in eine der beiden Führungsschienen (6,6') eine Führungsnut (11) für die Walzkörper (2,2') aufweisen.

7. Fördervorrichtung nach einem der vorangegangenen Ansprüche, **dadurch gekennzeichnet, dass** Mittel (12) zur Befestigung von Mitteln zum zeitweisen Festhalten von zu fördernden Gegenständen an den Förderkörpern (10) vorgesehen sind.

8. Fördervorrichtung gemäss mindestens einem der vorangehenden Ansprüche, **dadurch gekennzeichnet, dass** Förderkörper (10) mit einem Verbindungsmittel (13) für die Förderkörper miteinander verbunden sind.

9. Fördervorrichtung nach einem der Ansprüche 1 bis 4, **dadurch gekennzeichnet, dass** sie eine in sich geschlossene Vorrichtung ist, in welcher alle Förderkörper (10) zueinander im Eingriff sind und die Rollenkörper (1,1') sowie die Führungsschienen (6,6') in sich zurückführen.

10. Fördervorrichtung nach den obigen Ansprüchen, **dadurch gekennzeichnet, dass** die Förderkörper (10) so ausgestaltet sind, dass sie mittels eines Antriebes (19) angetrieben werden können.

11. Verwendung der Fördervorrichtung nach den Ansprüchen 1 bis 10 zur Förderung von flächigen Produkten, vorzugsweise Druckprodukte.

12. Verwendung der Fördervorrichtung nach den Ansprüchen 1 bis 10 zur Förderung von Paketen und von Reisegepäck.

**Claims**

1. A conveying device, comprising:

   - at least one conveying body (10);

- guide rails (6, 6');
- a first and a second rolling body (1, 1'), wherein each rolling body (1, 1') consists of a plurality of rollers (2, 2'), wherein the rolling bodies (1, 1') are actively connected to the at least one conveying body (10) and the guide rails (6, 6'), wherein the two rolling bodies (1, 1') are arranged between the at least one conveying body (10) and the guide rails (6, 6') such that the rollers (2, 2') arc freely rotatable given a displacement of the at least one conveying body (10), and wherein the two rolling bodies (1, 1') are arranged lying opposite one another with respect to the at least one conveying body (10) at a straight angle;
- at least one connection part (4''') with a connection body (4''), wherein each connection part (4''') comprises a receiver for receiving a roller (2, 2') of the first rolling body (1), and a receiver for receiving a roller (2, 2') of the second rolling body (1'), wherein the at least one connection part (4'''), the roller (2, 2') or the first rolling body (1) and the roller (2, 2') of the second rolling body (1') form a unit;

**characterised in that** the conveying device comprises several such units which arc connected amongst one another, wherein the connection bodies (4'') of the connection parts (4''') are articulately connected to one another by way of connection means (4').

2. A conveying device according to claim 1, **characterised in that** the connection part (4''') connects the roller (2, 2') of the first rolling body (1) and the roller (2, 2') of the second rolling body (1') to one another transversely to the conveying direction.

3. A conveying device according to claim 1, **characterised in that** the rolling bodies (1, 1') consist of balls (2').

4. A conveying device according to one of the preceding claims, **characterised in that** the active connection between the rolling bodies (1, 1') and the at least one conveying body (10) or a plurality of conveying bodies (10) is achieved by way of engagement grooves or guide grooves (7, 11) for the engagement of rollers (2, 2') of the rolling bodies (1, 1') into these.

5. A conveying device according to claim 1, **characterised in that** two guide rails (6, 6') form a unit.

6. A conveying device according to claim 5, **characterised in that** the conveying bodies (10), for the engagement into one of the two guide rails (6, 6'), comprises a guide groove (11) for the rollers (2, 2').

7. A conveying device according to one of the preceding claims, **characterised in that** means (12) are provided for the fastening of means for the temporary fixed holding of objects to be conveyed, on the conveying bodies (10).

8. A conveying device according to one of the preceding claims, **characterised in that** conveying bodies (10) arc connected to one another with connection means (13) for the conveying bodies.

9. A conveying device according to one of the claims 1 to 4, **characterised in that** it is a device which is closed per se and in which all conveying bodies (10) are engaged with one another, and the rolling bodies (1, 1') as well as the guide rails (86, 6') lead back into themselves.

10. A conveying device according to one of the preceding claims, **characterised in that** the conveying bodies (10) are designed such that they can be driven by way of a drive (19).

11. The use of the conveying device according to the claims 1 to 10 for conveying two-dimensional products, preferably printed products.

12. The use of the conveying device according to the claims 1 to 10 for conveying parcels and travel baggage.

**Revendications**

1. Dispositif de transport présentant :

   - au moins un corps de transport (10),
   - des rails de guidage (6, 6'),
   - un premier et un deuxième corps de roulement (1, 1'), chaque corps de roulement (1, 1') étant constitué de plusieurs corps roulants (2, 2'), les corps de roulement (1, 1') coopérant avec le ou les corps de transport (10) et les rails de guidage (6, 6'), les deux corps de roulement (1, 1') étant disposés entre le ou les corps de transport (10) et les rails de guidage (6, 6') de telle sorte que les corps roulants (2, 2') puissent tourner librement lorsque le ou les corps de transport (10) se déplacent, les deux corps de roulement (1, 1') étant disposés l'un en face de l'autre par rapport au corps ou aux corps de roulement (10) dans un angle étendu,
- au moins une partie de liaison (9''') dotée d'un corps de liaison (4''), chaque partie de liaison (4''') présentant un logement qui reprend un corps roulant (2, 2') du premier corps de roulement (1) et un logement qui reprend un corps roulant (2, 2') du deuxième corps de roulement (1'), la ou les pièces de liaison (4'''), le corps roulant (2, 2') du premier corps de roulement (1) et le corps roulant (2, 2') du deuxième corps de roulement (1') formant une entité,
**caractérisé en ce que**

le dispositif de transport présente plusieurs de ces entités reliées les unes aux autres, les corps de liaison (4") des parties de liaison (4''') étant reliés les uns aux autres de manière articulée au moyen d'un moyen de liaison (4').

2. Dispositif de transport selon la revendication 1, **caractérisé en ce que** la partie de liaison (4''') relie l'un à l'autre le corps roulant (2, 2') du premier corps de roulement (1) et le corps roulant (2, 2') du deuxième corps de roulement (1') transversalement par rapport à la direction de transport.

3. Dispositif de transport selon la revendication 1, **caractérisé en ce que** les corps de roulement (1, 1') sont constitués de billes (2').

4. Dispositif de transport selon l'une des revendications précédentes, **caractérisé en ce que** la coopération entre les corps de roulement (1, 1') et le ou les corps de transport (10) ou plusieurs corps de transport (10) est réalisée par des rainures d'engagement ou de guidage (7, 11) qui assurent l'engagement des corps roulants (2, 2') dans les corps de roulement (1, 1').

5. Dispositif de transport selon la revendication 1, **caractérisé en ce que** deux rails de guidage (6, 6') forment une entité.

6. Dispositif de transport selon la revendication 5, **caractérisé en ce que** les corps de transport (10) présentent une rainure de guidage (11) pour qui permet l'engagement des corps roulants (2, 2') dans l'un des deux rails de guidage (6, 6').

7. Dispositif de transport selon l'une des revendications précédentes, **caractérisé en ce qu'**il présente des moyens (12) de fixation de moyens de retenue temporaire d'objets à transporter sur les corps de transport (10).

8. Dispositif de transport selon au moins l'une des revendications précédentes, **caractérisé en ce que** des corps de transport (10) sont reliés les uns aux autres à l'aide d'un moyen (13) qui relie les corps de transport.

9. Dispositif de transport selon l'une des revendications 1 à 4, **caractérisé en ce qu'**il est un dispositif en soi fermé dans lequel tous les corps de transport (10) s'engagent les uns sur les autres et dans lequel les corps de roulement (1, 1') s'engagent dans les rails de guidage (6, 6').

10. Dispositif de transport selon les revendications précédentes, **caractérisé en ce que** les corps de transport (10) sont configurés de manière à pouvoir être entrainés au moyen d'un entraînement (19).

11. Utilisation du dispositif de transport selon les revendications 1 à 10 pour le transport de produits plats, de préférence de produits d'imprimerie.

12. Utilisation du dispositif de transport selon les revendications 1 à 10 pour le transport de paquets et de bagages.

Fig. 1A

Fig. 1B

Fig. 2A

Fig. 2B

Fig. 3B

Fig. 3A

Fig. 3C

Fig. 12A

Fig. 4A

Fig. 4B

Fig. 4C

**Fig. 5A**

**Fig. 5B**

**Fig. 5C**

Fig. 6

Fig. 7B

Fig. 7C

Fig. 7A

Fig. 8

Fig. 9B

Fig. 9A

Fig. 10A

Fig. 10B

Fig. 11C

Fig. 11D

Fig. 11A

Fig. 11B

EP 1 725 482 B1

**Fig. 12C**

**Fig. 12B**

Fig. 13A

Fig. 13B

Fig. 13C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1273415 B
- EP 0139287 A
- EP 0338500 A
- US 3690433 A
- US 3595377 A
- EP 0838602 A
- US 6203200 B
- JP 5231432 A